# EUROPÄISCHE PATENTSCHRIFT

(11) **EP 4 096 988 B1**
(45) Veröffentlichungstag und Bekanntmachung des Hinweises auf die Patenterteilung: **31.12.2025**
(21) Anmeldenummer: 21701968.6
(22) Anmeldetag: 25.01.2021
(51) Int. Cl.: B62D 1/181, B62D 1/184

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 29.01.2020 DE 102020201058
(43) Veröffentlichungstag der Anmeldung: 07.12.2022
(73) Patentinhaber: thyssenkrupp Presta AG, 9492 Eschen (LI); thyssenkrupp AG, 45143 Essen (DE)
(72) Erfinder: NAGY, Balint Kalman, 9462 Montlingen (CH)
(74) Vertreter: thyssenkrupp Intellectual Property GmbH
(86) Internationale Anmeldenummer: PCT/EP2021/051545
(87) Internationale Veröffentlichungsnummer: WO 2021/151807

(56) Entgegenhaltungen:
- WO-A1-2016/142119
- DE-A1- 102016 220 140
- DE-A1- 102017 200 888
- JP-A- 2017 001 622
- JP-A- 2018 039 330

## Beschreibung

### Stand der Technik

Die Erfindung betrifft eine elektrisch verstellbare Lenksäule für ein Kraftfahrzeug, umfassend ein Mantelrohr, in dem eine Lenkspindel um ihre Längsachse drehbar gelagert ist, und das in einer mit einer Karosserie eines Kraftfahrzeugs verbindbaren Führungseinheit in Richtung der Längsachse teleskopartig verstellbar aufgenommen ist, und einene elektromotorischen Verstellantrieb, der zwischen dem Mantelrohr und der Führungseinheit angeordnet ist, wobei die Führungseinheit mit einer inneren Lagerfläche eine äußere Mantelfläche des Mantelrohrs umgreift, und einen in Richtung der Längsachse erstreckten Schlitz aufweist, der eine Schlitzbreite zwischen seinen einander gegenüberliegenden Schlitzrändern hat, an dem eine Vorspannvorrichtung angreift, von der eine zur Verringerung der Schlitzbreite wirkende Spannkraft zur Vorspannung der Lagerfläche mit der Mantelfläche aufbringbar ist, wobei die Vorspannvorrichtung unlösbar, bleibend fixiert ist.

Die Lenksäule eines Kraftfahrzeugs umfasst eine Lenkspindel, an deren fahrerseitigen, in Fahrtrichtung hinteren Ende ein Lenkrad zur Eingabe manueller Lenkbefehle angebracht ist. Die Lenkspindel ist in einem Mantelrohr, das auch als Innenmantel oder inneres Mantelrohr bezeichnet wird, um ihre Längsachse drehbar gelagert. Um eine Längsverstellung des Lenkrads zur Anpassung an die Fahrerposition zu ermöglichen, weist eine gattungsgemäße elektrisch verstellbare Lenksäule eine mittels des elektromotorischen Verstellantrieb verstellbare Manteleinheit auf, bei der das Mantelrohr in Längsrichtung, d.h. in Richtung der Längsachse in einer Führungseinheit, auch als Führungskasten, Außenmantel oder äußeres Mantelrohr bezeichnet, axial teleskopartig verstellbar aufgenommen ist. Die Manteleinheit wird von einer Trageinheit gehalten, die mit der Karosserie des Kraftfahrzeugs verbunden ist.

Im Stand der Technik ist aus der DE 10 2017 200 888 A1 eine elektrisch verstellbare Lenksäule mit einer Führungseinheit mit einem Längsdurchgang bekannt, in dem das Mantelrohr in Längsrichtung teleskopierend verstellbar aufgenommen ist und ein elektromotorischer Verstellantrieb zwischen dem Mantelrohr und der Führungseinheit angeordnet ist. Eine innen im Längsdurchgang ausgebildete innere Lagerfläche umgreift eine äußere Mantelfläche des Mantelrohrs von außen, wobei die Lagerfläche die Mantelfläche zumindest über einen Teilbereich des Umfangs umschließt, wodurch das Mantelrohr in Längsrichtung gleitend geführt ist.

Um eine Längsverstellung zu ermöglichen und dabei eine ausreichende Steifigkeit der Lenksäule sicherzustellen, ist es aus der vorgenannten DE 10 2017 200 888 A1 bekannt, über eine Vorspannvorrichtung eine definierte Vorspannkraft aufzubringen, mit der die Lagerfläche radial gegen die Mantelfläche angepresst wird. Diese Vorspannkraft wird einmalig während der Montage der Lenksäule eingestellt bzw. kalibriert, und im Betrieb nicht mehr verändert. Hierzu weist die Führungseinheit einen Schlitz auf, der sich als Längsschlitz zumindest teilweise in Längsrichtung erstreckt, und zwischen seinen einander in Umfangsrichtung gegeneinander gerichteten, einander gegenüberliegenden Schlitzrändern bzw. -kanten eine einstellbare Schlitzbreite hat. Zur Einstellung der Schlitzbreite kann mittels der Vorspannvorrichtung eine Spannkraft aufgebracht werden, mit der die Schlitzränder in Umfangsrichtung gegeneinander belastet und zusammengezogen werden, und die somit auf eine Verringerung der Schlitzbreite gerichtet ist. Dadurch kann die Führungseinheit nach Art einer Klemmschelle mit dem Mantelrohr vorgespannt werden, wobei die umlaufende Lagerfläche mit einer definierten radialen Vorspannkraft von außen gegen die äußere Mantelfläche des Mantelrohrs angepresst wird.

Die bekannte Anordnung ermöglicht eine Einstellung der Vorspannkraft. Bei der Verringerung der Schlitzbreite wirken zwischen Lagerfläche und Mantelfläche beim Verspannen jedoch immer auch Reibungskräfte in Umfangsrichtung, welche die eigentliche radiale Vorspannung überlagern. Dadurch wird eine genaue, feinfühlige Einstellung erschwert, und tendenziell wird zur Gewährleistung einer hinreichenden Steifigkeit eine höhere Vorspannkraft eingestellt, was zu höherem Verschleiß führen kann.

Angesichts der vorangehend erläuterten Problematik ist es eine Aufgabe der vorliegenden Erfindung, die Vorspannkraft besser und genauer vorgeben zu können, und Verschleiß während der Verstellung zu reduzieren.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer elektrisch verstellbaren Lenksäule für ein Kraftfahrzeug, umfassend ein Mantelrohr, in dem eine Lenkspindel um ihre Längsachse drehbar gelagert ist, und das in einer mit einer Karosserie eines Kraftfahrzeugs verbindbaren Führungseinheit in Richtung der Längsachse teleskopartig verstellbar aufgenommen ist, und einen elektromotorischen Verstellantrieb, der zwischen dem Mantelrohr und der Führungseinheit angeordnet ist, wobei die Führungseinheit mit einer inneren Lagerfläche eine äußere Mantelfläche des Mantelrohrs umgreift, und einen in Richtung der Längsachse erstreckten Schlitz aufweist, der eine Schlitzbreite zwischen seinen einander in Umfangsrichtung gegenüberliegenden Schlitzrändern hat, an dem eine Vorspannvorrichtung angreift, von der eine zur Verringerung der Schlitzbreite wirkende Spannkraft zur Vorspannung der Lagerfläche mit der Mantelfläche aufbringbar ist, wobei die Vorspannvorrichtung unlösbar, bleibend fixiert ist, ist erfindungsgemäß vorgesehen, dass ein Klemmkörper mit den Schlitzrändern über eine Umlenkvorrichtung zusammenwirkt, welches eine Verringerung der Schlitzbreite umsetzt in eine radiale Klemmbewegung des Klemmkörpers zur radialen Vorspannung des Klemmkörpers gegen die äußere Mantelfläche des Mantelrohrs.

Bei der Erfindung wird eine Verringerung der Schlitzbreite über eine Umlenkvorrichtung umgewandelt in eine radial nach innen gerichtete Klemmbewegung eines Klemmkörpers. Dabei wird die zur Verringerung der Schlitzbreite von der Vorspannvorrichtung auf die Führungseinheit in Umfangsrichtung aufgebrachte Spannkraft durch das Umlenkvorrichtung in eine radial nach auf den Klemmkörper wirkende Klemmkraft umgelenkt. Der Klemmkörper ist nach außen und in Längsrichtung gegen die Führungseinheit abgestützt, und wird mit der Klemmkraft radial gegen das Mantelrohr angepresst.

Es ist gemäß der Erfindung vorgesehen, dass die Vorspannvorrichtung unveränderbar, bleibend fixiert ist. Somit erfolgt während der Montage der Lenksäule die einmalige Einstellung der Vorspannkraft mittels der Vorspannvorrichtung und wird anschließend unveränderbar bleibend fixiert, wobei während des Betriebs der Lenksäule die Vorspannvorrichtung in einer unveränderten Einstellung verbleibt. Die Vorspannvorrichtung wird auschließlich bei der Kalibrierung der Lenksäule bei der Montage eingestellt. Mit anderen Worten ist die Vorspannvorrichtung im normalen Betrieb während der Verstellung mittels des Verstellantriebs in der gleichen Stellung wie in einem Ruhezustand, in dem keine Verstellung erfolgt und sich das Mantelrohr in unveränderter Position zu der Führungseinheit befindet. Es ist nicht vorgesehen, dass die Vorspannvorrichtung durch den Fahrzeugführer betrieben wird. Besonders bevorzugt ist die Vorspannvorrichtung unlösbar, bleibend fixiert. Die dauerhafte Fixierung kann stoffschlüssig, kraftschlüssig und/oder formschlüssig erfolgen, beispielsweise durch Verklebung, Verpressung oder dergleichen, wodurch Einstellmittel zur Veränderung der Schlitzbreite in der einmal vorgenommenen Einstellung festgelegt werden.

Die erfindungsgemäße Umlenkvorrichtung ermöglicht die gezielte Erzeugung und Steuerung der Klemm- bzw. Vorspannkraft, mit welcher das Mantelrohr zwischen den erfindungsgemäßen Klemmkörper und der Lagerfläche, welche gegen das das Mantelrohr außerhalb des Klemmkörpers anliegt, eingespannt ist. Dadurch ist es möglich, bei der Erzeugung der Vorspannkraft zur Kalibrierung der Lenksäule die in Radial- und Umfangsrichtung wirkenden Kraftkomponenten zu entkoppeln, so dass die oben beschriebenen Nachteile des Standes der Technik vermieden werden können. Vorteilhaft ist, dass die auf das Mantelrohr ausgeübte Vorspannkraft genauer vorgegeben werden kann, und eine feinfühlige Einstellung ermöglicht wird, so dass die wirksame Verschiebekraft, sprich die wirkende Reibkraft, zwischen dem Mantelrohr und der Führungseinheit während der Verstellung genauer als im Stand der Technik einstellbar ist. Daraus resultiert ein verringerter Verschleiß zwischen dem Mantelrohr und der Führungseinheit während der Verstellung und eine erhöhte Lebensdauer.

Bevorzugt liegen sich die Schlitzränder in Umfangsrichtung gegenüber, so dass die zur Verringerung der Schlitzbreite wirkende Spannkraft in Umfangsrichtung wirkt.

Durch die Ausgestaltung der Umlenkvorrichtung kann eine definierte Kraft-Weg-Charakteristik vorgegeben werden, die im Stand der Technik durch das Kraftübersetzungsverhältnis zwischen der Veränderung der Schlitzbreite und der über den Umfangsbereich an dem Mantelrohr anliegenden Lagerfläche fest vorgegeben ist. Die Umlenkvorrichtung kann eine lineare Umsetzung der von der Spannvorrichtung erzeugten Spannkraft in die von dem Klemmkörper auf das Mantelrohr ausgeübte Vorspannkraft ermöglichen.

Der Klemmkörper, der gleichbedeutend auch als Presskörper bezeichnet werden kann, kann bevorzugt separat von der Führungseinheit ausgebildet sein, und bei der Montage der Umlenkvorrichtung in Wirkeingriff gebracht werden. Dadurch können der Klemmkörper und die Führungseinheit unabhängig voneinander unterschiedliche Materialien aufweisen, die in Bezug auf unterschiedliche Beanspruchung und Funktion optimiert sein können. Beispielsweise können unterschiedliche metallische Werkstoffe, Kunststoffe und/oder Werkstoffkombinationen eingesetzt werden, beispielsweise zur Erzeugung einer definierten Reibung. Dadurch kann beispielsweise eine verlustarme Kraftübersetzung in der Umlenkvorrichtung erreicht werden, und/oder eine spielarme und gleichzeitig leichtgängig verstellbare Gleitführung des Mantelrohrs in der Führungseinheit. Durch eine separate Ausbildung kann weiterhin mit geringem Aufwand eine flexible Anpassung an spezielle Anforderung erfolgen, beispielsweise im Hinblick auf unterschiedliche Getriebecharakteristiken und/oder Abmessungen innerhalb der Lenksäule.

Es ist alternativ möglich, den Klemmkörper mit der Führungseinheit oder dem Mantelrohr integriert auszubilden. Beispielsweise kann eine lösbare oder unlösbare Verbindung vorgesehen sein, zur Anpassung an einen Bauraum oder andere spezifische Randbedingungen, welche nicht die Flexibilität einer separaten Ausbildung erfordern.

Bevorzugt kann vorgesehen sein, dass der Klemmkörper im Bereich des Schlitzes zwischen den Schlitzrändern und der äußeren Mantelfläche des Mantelrohrs angeordnet ist. Zwischen den Schlitzrändern und dem der Außenseite des Mantelrohrs befindet sich im Stand der Technik ein freier Zwischenraum, in dem ein erfindungsgemäßer Klemmkörper angeordnet werden kann. Ein Vorteil dabei ist, dass die verbesserte Funktionalität der Erfindung innerhalb eines gegebenen, vorhandenen Bauraums realisiert werden kann, wodurch die Funktion der Lenksäule ohne Veränderung der übrigen Randbedingungen verbessert werden kann. Ein weiterer Vorteil ist, dass durch die Anordnung des Klemmkörpers innerhalb des im Stand der Technik freien Umfangsbereichs zwischen den Schlitzrändern die Steifigkeit der Klemmverbindung und damit der Lenksäule erhöht werden kann.

Es kann vorgesehen sein, dass der Klemmkörper eine Steuerfläche aufweist, die mit einer an der Führungseinheit ausgebildeten korrespondierenden Steuerfläche zusammenwirkt. Die Umlenkvorrichtung kann dadurch als Keilführung, Kulissenführung oder Kurvenführung ausgebildet sein, bei dem die Steuerflächen am Klemmkörper und an der Führungseinheit aufeinander gleiten können und derart geformt sind, dass sie eine Relativbewegung in Umfangsrichtung zwischen dem Klemmkörper und einem Schlitzrand in eine Relativbewegung mit mindestens einer radialen Bewegungskomponente umlenken. Ein derartiges Kurvengetriebe bzw. eine derartige Kulissenführung kann mit geringem Aufwand durch einfache Formgebung des Schlitzes bzw. der Schlitzränder und des Klemmkörpers realisiert werden, wobei durch eine entsprechende Kurvenform der Steuerflächen das Kraft- und/oder Weg-Übersetzungsverhältnis vorgegeben werden kann. Dadurch, dass keine zusätzlichen Getriebeglieder erforderlich sind, sind ein kompakter und betriebssicherer Aufbau und eine rationelle Fertigung und Montage möglich.

Eine vorteilhafte Weiterbildung ist der vorgenannten Ausführung ist, dass eine Steuerfläche des Klemmkörpers oder der Führungseinheit mindestens eine parallel zur Längsachse verlaufende, gegen die Umfangsrichtung geneigte Keilfläche aufweist, welche eine korrespondierende Stützfläche an der Führungseinheit oder am Klemmkörper kontaktiert. Eine Keilfläche kann beispielsweise an einem oder an beiden der Schlitzränder angeordnet sein, so dass mindestens eine dagegen anliegende Stützfläche des Klemmkörpers bei einer Relativbewegung in Umfangsrichtung durch eine Verringerung der Schlitzbreite an der Steuerfläche entlangbewegt wird, bevorzugt entlanggleitet. Es ist auch eine umgekehrte Anordnung der Keilfläche am Klemmkörper und der Stützfläche an einem oder beiden der Schlitzränder möglich. Es ist ebenfalls möglich, dass die Stützfläche ebenfalls als Keilfläche ausgebildet ist, so dass die Umlenkvorrichtung als Keilführung bzw. Keilgetriebe mit korrespondierenden, gegeneinander anliegenden und aneinander gleitend bewegbaren Keilflächen, die im Wesentlichen dieselbe Neigung haben. Die Keilfläche kann eben ausgebildet sein mit einer gleichmäßig durchgehenden Neigung, wodurch eine lineare Übersetzung erzeugt werden kann.

In einer vorteilhaften Weiterbildung kann vorgesehen sein, dass der Klemmkörper zwei bezüglich einer Längsebene spiegelbildlich angeordnete Keilflächen aufweist, die radial nach außen zusammenlaufen, und zwischen korrespondierenden Stützflächen an der Führungseinheit angeordnet sind. Die Keilflächen am Klemmkörper können bevorzugt eben ausgebildet sein und laufen gegeneinander geneigt radial nach außen zusammen, so dass mit anderen Worten eine Art Prisma oder Spitzdach mit radial nach außen weisender Spitze gebildet wird. Die Spitze kann abgerundet sein und muss nicht zu einer scharfen Kante zusammenlaufen. Die korrespondierenden Stützflächen in dem Schlitz können parallel zu den Keilflächen ausgebildet und angeordnet sein, so dass der Schlitz im Querschnitt radial nach außen gerichtet V-förmig zusammenläuft. Bei einer Verringerung der Schlitzbreite mittels der Spannvorrichtung gleiten die Keilflächen bezüglich der Stützflächen entsprechend der Neigung radial schräg nach innen, so dass der Klemmkörper eine radial nach innen gerichtete Klemmbewegung ausführt. Das Übersetzungsverhältnis zwischen der Relativbewegung der Keilflächen an den Schlitzrändern in Umfangsrichtung und der radialen Klemmbewegung des Klemmkörpers kann einfach durch die Neigung der Keilflächen vorgegeben werden, wobei ein relativ stumpfer Spitzenwinkel der Spitze für eine gegebene Verringerung der Schlitzbreite eine kleine radiale Klemmbewegung mit relativ großer Klemmkraft bewirkt, und ein relativ spitzer Spitzenwinkel eine relativ große Klemmbewegung mit geringerer Klemmkraft. Vorteilhaft ist, dass ein Prismen- oder Spitzdach-förmiger Klemmkörper mit geringem Aufwand gefertigt werden kann und einfach montierbar ist. Dabei ist zwischen den symmetrischen Keilflächen eine sichere und genaue radiale Führung der Klemmbewegung des Klemmkörpers und dadurch eine sichere Funktion gewährleistet.

Bevorzugt kann der Klemmkörper eine radial gegen die Mantelfläche gerichtete Gleitfläche aufweisen. Mit der Gleitfläche wird der Klemmkörper mit der durch die Umlenkvorrichtung erzeugten Vorspannkraft radial von außen gegen die äußere Mantelfläche des Mantelrohrs angepresst und sorgt für eine spielarme und steife Führung des Mantelrohrs in der Führungseinheit.

Zur Verringerung der zum Verstellen erforderliche Verstellkraft kann der Klemmkörper, bevorzugt im Bereich seiner gegen das Mantelrohr vorgespannten Gleitfläche, reibungsmindernd ausgestaltet sein, beispielsweise durch eine Oberflächenbeschichtung oder -strukturierung.

Es kann vorgesehen sein, dass der Klemmkörper eine Schmiertasche aufweist. Ein derartige Schmiertasche zur Bereitstellung eines Schmierstoffrückhaltevolumens kann gebildet werden durch eine Vertiefung oder Einformung, die in einer Gleitfläche ausgebildet sein kann, und die mit einem Schmierfettvorrat gefüllt sein kann. Dadurch kann eine wartungsarme, dauerhafte Schmierung realisiert werden. Eine Schmiertasche kann beispielsweise in einer gegen das Mantelrohr anliegenden Gleitfläche angeordnet sein, um ein leichtgängiges Verstellen zu ermöglichen. Auch in einer Steuer- oder Keilfläche kann eine Schmiertasche vorgesehen sein, um die Reibung in der Umlenkvorrichtung zu verringern.

Der Klemmkörper kann zumindest teilweise aus einem Kunststoff ausgebildet sein. Die Führungseinheit, und auch das Mantelrohr sind in der Regel aus einem metallischen Werkstoff gefertigt, zumeist Stahl, einer Aluminiumlegierung oder Metallguss. Dadurch, dass der Klemmkörper als Ganzes, oder zumindest im Bereich von Steuer- und/oder Klemmflächen aus einem Kunststoff ausgebildet ist, wie beispielsweise Polyamid (PA), Polypropylen (PP), Polytetrafluorethylen (PTFE) oder dergleichen, kann die Reibung in der Umlenkvorrichtung und/oder zwischen Mantelrohr und Klemmkörper bzw. Führungseinheit verringert und optimiert werden.

Der Klemmkörper ist bevorzugt in Richtung der Längsachse an der Führungseinheit abgestützt. Dadurch ist der Klemmkörper relativ zur Führungseinheit in Längsrichtung fixiert, und ermöglicht in Fixierstellung durch die kraftschlüssige Verbindung die Fixierung des Mantelrohrs in Längsrichtung. Im Bereich des Spalts ist der Klemmkörper bevorzugt auch in Umfangsrichtung abgestützt, beispielsweise zwischen den oben beschriebenen Keil- oder Stützflächen an den Schlitzrändern. Beim Umschalten zwischen der Löse- und Fixierstellung kann der Klemmkörper dann relativ zur Führungseinheit bevorzugt nur eine zwangsgeführte Klemmbewegung in radialer Richtung ausführen.

Es kann vorgesehen sein, dass die Vorspannvorrichtung einen Spannbolzen aufweist, der sich quer zur Längsachse über den Schlitz erstreckt und im Bereich der Schlitzränder in Umfangsrichtung an der Führungseinheit angreift. Der Spannbolzen kann beispielsweise als Gewindebolzen ausgebildet sein, der die Führungseinheit quer zum Schlitz durchsetzt, und der sich mit einem Bolzenkopf von außen an dem einen Schlitzrand abstützt, und mit einer aufgeschraubten Mutter von außen an dem anderen, gegenüberliegenden Schlitzrand. Dadurch kann durch Aufschrauben der Mutter die Schlitzbreite verringert werden, zur Einstellung der Vorspannkraft.

Bei der vorgenannten Ausführung kann es vorteilhaft sein, dass der Klemmkörper in Richtung der Längsachse an dem Spannbolzen abgestützt ist. Dies kann dadurch erreicht werden, dass sich der Spannbolzen quer durch eine Ausnehmung oder Öffnung des Klemmkörpers erstreckt, und ebenfalls durch eine Ausnehmung oder Öffnung in der Führungseinheit, so dass eine in Längsrichtung wirksame Formschlussverbindung zwischen der Führungseinheit und dem Klemmkörper ausgebildet wird. Vorteilhaft ist die kompakte Ausführung der Abstützung in Längsrichtung, und die Möglichkeit einer einfachen und sicheren Montage.

Die motorische Längsverstellung weist bevorzugt einen elektromotorischen Verstellantrieb auf, der zwischen dem Mantelrohr und der Führungseinheit angreift und eine relative teleskopierende Verstellung ermöglicht. Ein derartiger Verstellantrieb kann in an sich bekannter Weise als Spindeltrieb ausgebildet sein, bei dem eine Spindelmutter und eine darin eingreifende Gewindespindel durch einen elektrischen Motor relativ zueinander drehend antreibbar sind, wodurch eine lineare Verstellung in Richtung der Spindelachse erzeugt werden kann. Dadurch, dass durch die Erfindung die Vorspannung genauer vorgegeben werden kann, kann die Gleitreibung zwischen der Führungseinheit und dem Mantelrohr und damit die erforderliche Verstellkraft besser und genauer eingestellt werden, so dass die erforderliche Antriebsleistung des Verstellantriebs optimiert werden kann, der entsprechend kleiner und leichter dimensioniert werden kann als im Stand der Technik.

Zusätzlich kann die Führungseinheit in Höhenrichtung an der Trageinheit verstellbar und fixierbar gehalten sein. Dadurch kann eine Höhenverstellung der Manteleinheit und damit des Lenkrads erfolgen. Hierzu kann ebenfalls ein elektromotorischer Verstellantrieb vorgesehen sein.

### Beschreibung der Zeichnungen

Vorteilhafte Ausführungsformen der Erfindung werden im Folgenden anhand der Zeichnungen näher erläutert. Im Einzelnen zeigen:
- Figur 1: eine elektrisch verstellbare Lenksäule gemäß der Erfindung in einer schematischen perspektivischen Ansicht,
- Figur 2: eine vergrößerte Detailansicht der Lenksäule gemäß Figur 1,
- Figur 3: eine Detailansicht ähnlich Figur 2 in teilweise auseinander gezogener Darstellung,
- Figur 4: ein Querschnitt durch die Lenksäule gemäß Figur 1,
- Figur 5: eine vergrößerte Detailansicht des Querschnitts von Figur 4 in einer ersten Ausführung,
- Figur 6: eine vergrößerte Detailansicht des Querschnitts von Figur 4 in einer zweiten Ausführung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

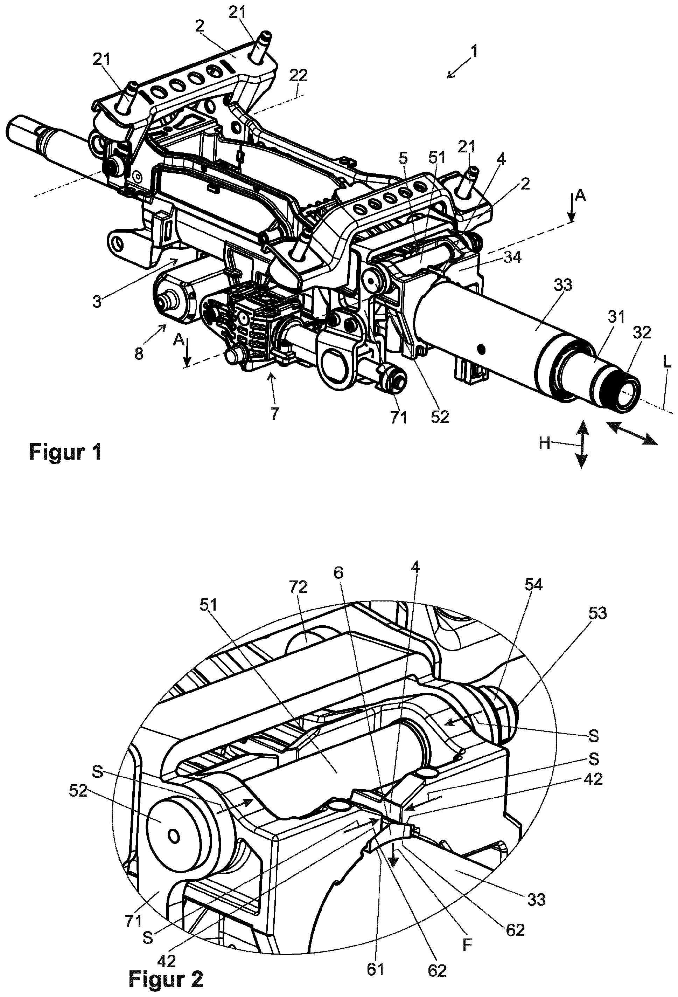

Figur 1 zeigt eine elektrisch verstellbare Lenksäule 1 in einer schematischen perspektivischen Ansicht, und zwar in der Einbaulage in Fahrtrichtung schräg von hinten auf die linke Seite.

Die Lenksäule weist eine Trageinheit 2 auf, mit als Schrauben ausgebildete Verbindungsmitteln 21 zur Anbringung an einer nicht dargestellten Karosserie eines Kraftfahrzeugs.

Von der Trageinheit 2 ist eine Manteleinheit 3 gehalten, die eine Lenkspindel 31 umfasst, welche an ihrem in Fahrtrichtung hinteren Ende einen Befestigungsabschnitt 32 zur Anbringung eines nicht dargestellten Lenkrads aufweist, und die um eine Längsachse L drehbar in einem Mantelrohr 33 gelagert ist. Das Mantelrohr 33 ist in einer Führungseinheit 34 in einer Längsöffnungg 35 in Längsrichtung, d.h. in Richtung der Längsachse L teleskopartig verstellbar aufgenommen, wie mit dem Doppelpfeil angedeutet ist.

Die Führungseinheit 34 ist an der Trageinheit 2 im vorderen Bereich um eine waagerecht quer zur Längsachse L liegende Höhenschwenkachse 22 verschwenkbar gelagert, wodurch die Manteleinheit 3 zur Höhenverstellung des Lenkrads in einer Höhenrichtung H relativ zur Trageinheit 2 auf und ab verstellbar ist, wie mit dem Doppelpfeil angedeutet ist.

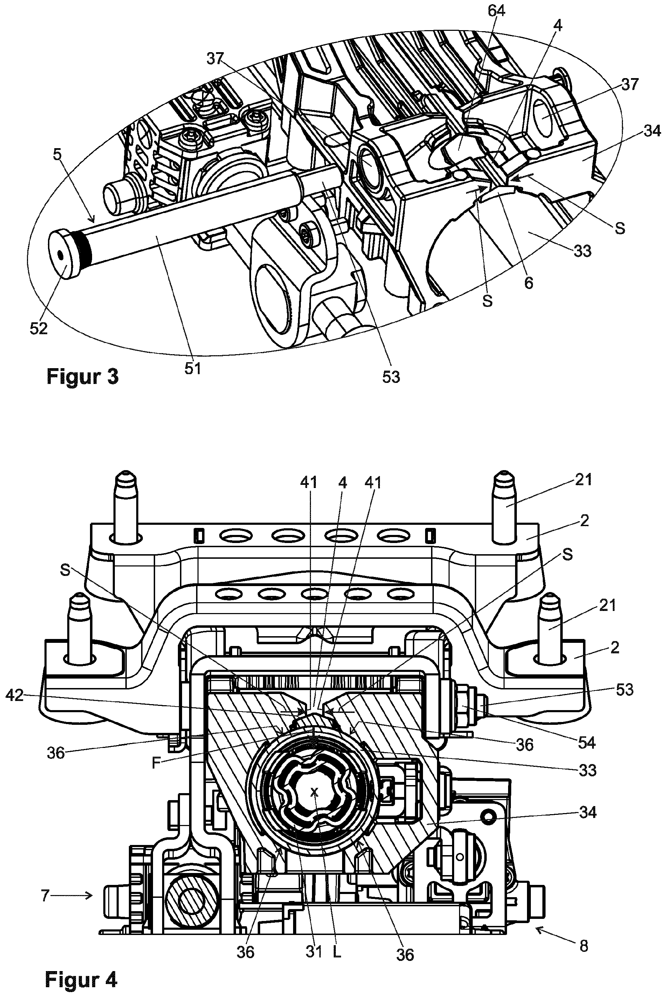

In der in Figur 4 gezeigten Querschnittsansicht A-A aus Figur 1 ist erkennbar, wie das Mantelrohr 33 koaxial in dem Öffnungsquerschnitt des Längsdurchgangs 35 aufgenommen ist. Die Führungseinheit 34 umgreift dabei das Mantelrohr 33 mit radial nach innen gerichteten Lagerflächen 36, die sich jeweils über einen Umfangsbereich in dem Längsdurchgang 35 erstrecken, und die im dargestellten Beispiel in mehrere, radial nach innen vorspringende Umfangsabschnitte unterteilt sind. Die Lagerflächen 36 liegen in Längsrichtung gleitend außen an der äußeren Mantelfläche des Mantelrohrs 33 an.

Die Führungseinheit 34 weist einen in Längsrichtung verlaufenden Schlitz 4 auf, mit einer Schlitzbreite, die sich zwischen zwei einander in Umfangsrichtung gegenüberliegenden Schlitzrändern 41 erstreckt.

Eine Vorspannvorrichtung 5 weist einen Spannbolzen 51 auf, der als Gewindebolzen ausgebildet ist mit einem Bolzenkopf 52 und einem Gewindeabschnitt 53, auf den eine Mutter 54 aufgeschraubt ist. Der Spannbolzen 51 ist quer zur Längsachse L durch die Führungseinheit 34 hindurchgeführt und erstreckt sich über den Schlitz 4. Dadurch, dass der Bolzenkopf 52 bezüglich des einen Schlitzrandes 41 von außen an der Führungseinheit 34 abgestützt ist, und die Mutter 54 bezüglich des anderen Schlitzrandes 41 von außen an der gegenüberliegenden Seite von außen an der Führungseinheit 34 abgestützt ist, können die beiden Schlitzränder 41 durch Aufschrauben der Mutter 54 mit einer Spannkraft S in Umfangsrichtung gegeneinander bewegt werden, wie in Figur 4 und der vergrößerten Detailansicht von Figur 2 eingezeichnet ist. Durch Verstellen der Mutter 54 kann auf diese Weise die Schlitzbreite des Schlitzes 4 eingestellt werden.

Im Bereich des Schlitzes 4 ist ein erfindungsgemäßer Klemmkörper 6 angeordnet. Dieser liegt mit einer radial nach innen gerichteten Gleitfläche 61 an der äußeren Mantelfläche des Mantelrohrs 34 an.

Die Gleitfläche 61 des Klemmkörpers kann mit einer reibungsmindernden Schicht versehen sein, beispielsweise einem Gleitlack.

Der Klemmkörper 6 hat einen Prismen- oder Spitzdach-förmigen Querschnitt, der zwei gegeneinander geneigte Keilflächen 62 aufweist, die radial nach außen gerichtet zusammenlaufen. Bezüglich einer Längsebene, in der die Längsachse L liegt, sind die beiden Keilflächen 62 spiegelsymmetrisch angeordnet, und erstrecken sich in Längsrichtung parallel zur Längsachse L.

Mit den Keilflächen 62 steht der Klemmkörper 6 in Gleitkontakt mit korrespondierenden Stützflächen 42, die innen an der Führungseinheit 34 beiderseits des Schlitzes 4 im Bereich der Schlitzränder 41 ausgebildet sind.

Die Keilflächen 52 bilden zusammen mit den Stützflächen 42 eine erfindungsgemäße Umlenkvorrichtung, nämlich ein Keil- oder Kurvengetriebe, welche auch als Keil- oder Kurvenführung bezeichnet werden können. Eine Verringerung der Schlitzbreite in Umfangsrichtung wird über die geneigten Stützflächen 42 und Keilflächen 52 in eine radial nach innen gerichtete Klemmbewegung umgesetzt, wodurch die Gleitfläche 61 des Klemmkörpers 6 mit einer Vorspannkraft F radial von außen gegen die äußere Mantelfläche des Mantelrohrs 33 vorgespannt wird.

Durch Aufschrauben der Mutter 54 auf den Spannbolzen 51 kann die Spannkraft S zur Verringerung der Schlitzbreite eingestellt werden, wodurch die über den Klemmkörper 6 auf das Mantelrohr 33 ausgeübte Vorspannkraft F feinfühlig justierbar ist. Dadurch kann das Lagerspiel der Gleitführung zwischen dem Mantelrohr 33 und den Lagerflächen 36 der Führungseinheit 34 und dem Klemmkörper 6 einfach optimal eingestellt werden.

Es kann vorgesehen sein, dass die Mutter 54 und der Spannbolzen 51 miteinander unlösbar verbunden sind. Dies kann beispielsweise mittels einer stoffschlüssigen Verbindung, wie Schweißen oder Kleben, oder durch plastische Verformung mittels einer Verstemmoperation oder dergleichen erfolgen.

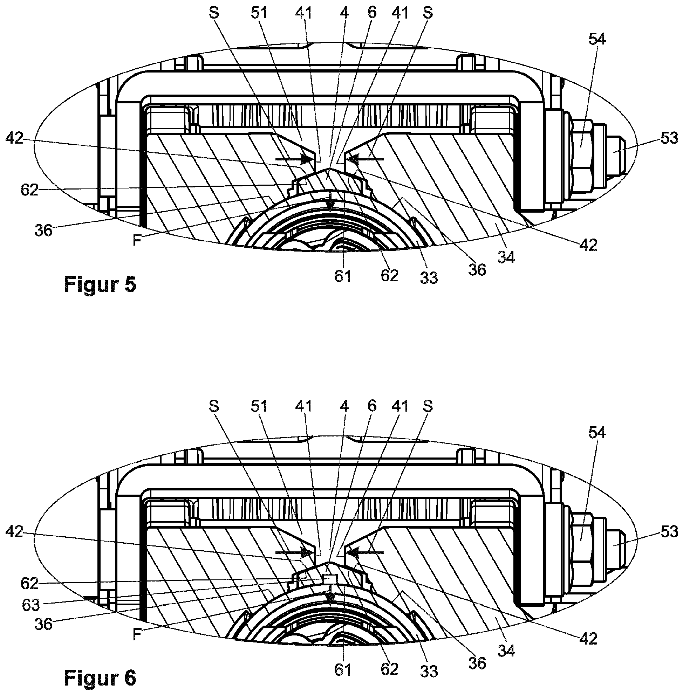

Figur 5 zeigt eine vergrößerte Teilansicht des Querschnitts von Figur 4, in der die Anordnung des Klemmkörpers 6 deutlich erkennbar ist. Figur 6 zeigt in derselben Ansicht eine Weiterbildung, bei der eine Schmiertasche 63 als Einformung im Bereich der Gleitfläche 61 ausgebildet ist, die zur dauerhaften Schmierung mit Schmierfett gefüllt sein kann.

Die Längsverstellung durch teleskopierendes Ein- oder Ausfahren des Mantelrohrs 33 relativ zur Führungseinheit 34 erfolgt mittels eines elektromotorischen Längs-Verstellantriebs 8, der in an sich bekannter Weise als Spindeltrieb ausgebildet sein kann, der in Längsrichtung zwischen dem Mantelrohr 33 und der Führungseinheit 34 eingegliedert bzw. angeordnet ist.

Zur Abstützung in Längsrichtung an der Führungseinheit 34 weist der Klemmkörper 6 an seiner Oberseite eine Formschlussausnehmung 64 auf, die in der Darstellung von Figur 3 erkennbar ist, in welcher der Spannbolzen 51 demontiert dargestellt ist. Zur Montage wird der Spannbolzen 51 durch die beiderseits des Schlitzes 4 an der Führungseinheit 34 ausgebildeten Öffnungen 37 hindurchgeführt, und greift dabei zur Bildung eines in Längsrichtung wirkenden Formschlusses in die Formschlussausnehmung 64 ein. In den Öffnungen 37 können optional Bundbuchsen angeordnet sein, wobei es sich bevorzugt um Bundbuchsen aus einem Buntmetall wie Messing handelt. Dadurch ist der Klemmkörper 6 in Längsrichtung formschlüssig an der Führungseinheit 34 abgestützt.

Zur Höhenverstellung ist ein elektromotorischer Verstellantrieb 7 vorgesehen, der als Spindeltrieb ausgebildet ist, welcher sich an der Führungseinheit 34 abstützt und an einem Stellhebel 71 angreift, der um den Spannbolzen 51 an der Führungseinheit 34 drehbar gelagert ist. Mit einem Hebelende 72 ist der Stellhebel 71 an der Trageinheit 2 angelenkt. Dadurch kann über eine Verschwenkung des Stellhebels 71 mittels des Verstellantriebs 7 eine Höhenverstellung durch verschwenkne der Manteleinheit 3 um die Höhenschenkachse 22 erfolgen.

In einer nicht dargestellten Ausführungsform kann es vorgesehen sein, dass der Stellhebel 71 mit einer Gelenkachse an der Führungseinheit 3 drehbar gelagert ist, wobei der Spannbolzen 51 nicht durch die Gelenkachse gebildet ist. Weiters sei darauf hingewiesen, dass eine Höhenverstellung nicht erfindungswesentlich ist und die erfindungsgemäße Lehre auch bei einer rein längenverstellbare Lenksäule realisierbar ist.

### Bezugszeichenliste

- 1: Lenksäule
- 2: Trageinheit
- 21: Verbindungsmittel
- 3: Manteleinheit
- 31: Lenkspindel
- 32: Befestigungsabschnitt
- 33: Mantelrohr
- 34: Führungseinheit
- 35: Längsdurchgang
- 36: Lagerflächen
- 37: Öffnungen
- 4: Schlitz
- 41: Schlitzrand
- 42: Stützflächen
- 5: Vorspannvorrichtung
- 51: Spannbolzen
- 52: Bolzenkopf
- 53: Gewindeabschnitt
- 54: Mutter
- 6: Klemmkörper
- 61: Gleitfläche
- 62: Keilflächen
- 63: Schmiertasche
- 64: Formschlussausnehmung

- L: Längsachse
- S: Spannkraft
- F: Vorspannkraft

## Patentansprüche

1. Elektrisch verstellbare Lenksäule (1) für ein Kraftfahrzeug, umfassend
ein Mantelrohr (33), in dem eine Lenkspindel (31) um ihre Längsachse (L) drehbar gelagert ist, und das in einer mit einer Karosserie eines Kraftfahrzeugs verbindbaren Führungseinheit (34) in Richtung der Längsachse (L) teleskopartig verstellbar aufgenommen ist, und ein elektromotorischer Verstellantrieb (7), der zwischen dem Mantelrohr (33) und der Führungseinheit (34) angeordnet ist,
wobei die Führungseinheit (34) mit einer inneren Lagerfläche (36) eine äußere Mantelfläche des Mantelrohrs (33) umgreift, und einen in Richtung der Längsachse (L) erstreckten Schlitz (4) aufweist, der eine Schlitzbreite zwischen seinen einander gegenüberliegenden Schlitzrändern (41) hat, an dem eine Vorspannvorrichtung (5) angreift, von der eine zur Verringerung der Schlitzbreite wirkende Spannkraft (S) zur Vorspannung der Lagerfläche (36) mit der Mantelfläche aufbringbar ist,
wobei die Vorspannvorrichtung (5) unlösbar, bleibend fixiert ist,
**dadurch gekennzeichnet,**
**dass** ein Klemmkörper (6) mit den Schlitzrändern (41) über eine Umlenkvorrichtung (42, 62) zusammenwirkt, welche eine Verringerung der Schlitzbreite umsetzt in eine radiale Klemmbewegung des Klemmkörpers (6) zur radialen Vorspannung gegen die äußere Mantelfläche des Mantelrohrs (33).

2. Lenksäule nach Anspruch 1, **dadurch gekennzeichnet, dass** der Klemmkörper (6) im Bereich des Schlitzes (4) zwischen den Schlitzrändern (41) und der äußeren Mantelfläche des Mantelrohrs (33) angeordnet ist.

3. Lenksäule nach einem der vorangehenden Ansprüche, **dadurch gekennzeichnet, dass** der Klemmkörper (6) eine Steuerfläche (62) aufweist, die mit einer an der Führungseinheit (34) ausgebildeten korrespondierenden Steuerfläche (42) zusammenwirkt.

4. Lenksäule nach Anspruch 3, **dadurch gekennzeichnet, dass** eine Steuerfläche (62) des Klemmkörpers (6) oder der Führungseinheit (34) mindestens eine parallel zur Längsachse (L) verlaufende, gegen die Umfangsrichtung geneigte Keilfläche (62) aufweist, welche eine korrespondierende Stützfläche (42) an der Führungseinheit (34) oder am Klemmkörper (6) kontaktiert.

5. Lenksäule nach Anspruch 3 oder 4, **dadurch gekennzeichnet, dass** der Klemmkörper (6) zwei bezüglich einer Längsebene spiegelbildlich angeordnete Keilflächen (62) aufweist, die radial nach außen zusammenlaufen, und zwischen korrespondierenden Stützflächen (42) an der Führungseinheit (34) angeordnet sind.

6. Lenksäule nach einem der vorangehenden Ansprüche, **dadurch gekennzeichnet, dass** der Klemmkörper (6) eine radial gegen die Mantelfläche gerichtete Gleitfläche (61) aufweist.

7. Lenksäule nach einem der vorangehenden Ansprüche, **dadurch gekennzeichnet, dass** der Klemmkörper (6) mindestens eine Schmiertasche (63) aufweist.

8. Lenksäule nach einem der vorangehenden Ansprüche, **dadurch gekennzeichnet, dass** der Klemmkörper (6) zumindest teilweise aus einem Kunststoff ausgebildet ist.

9. Lenksäule nach einem der vorangehenden Ansprüche, **dadurch gekennzeichnet, dass** der Klemmkörper (6) in Richtung der Längsachse (L) an der Führungseinheit (34) abgestützt ist.

10. Lenksäule nach einem der vorangehenden Ansprüche, **dadurch gekennzeichnet,**
**dass** die Vorspannvorrichtung (5) einen Spannbolzen (51) aufweist, der sich quer zur Längsachse (L) über den Schlitz (4) erstreckt und im Bereich der Schlitzränder (41) in Umfangsrichtung angreift.

11. Lenksäule nach Anspruch 10, **dadurch gekennzeichnet, dass** der Klemmkörper (6) in Richtung der Längsachse (L) an dem Spannbolzen (51) abgestützt ist.

## Claims

1. An electrically adjustable steering column (1) for a motor vehicle, comprising:
a casing tube (33) in which a steering spindle (31) is mounted so as to be rotatable about its longitudinal axis (L), and which is received so as to be telescopically adjustable in the direction of the longitudinal axis (L) in a guide unit (34) which can be connected to a body of a motor vehicle, and an electromotor adjustment drive (7) which is arranged between the casing tube (33) and the guide unit (34),
wherein an inner bearing face (36) of the guide unit (34) surrounds an outer casing surface of the casing tube (33) and has a slot (4) which extends in the direction of the longitudinal axis (L) and has a slot width between its mutually opposing slot edges (41), and on which engages a preload device (5) able to apply a tightening force (S) acting to reduce the slot width in order to preload the bearing face (36) together with the casing surface,
wherein the preload device (5) is unchangeably and permanently fixed,
**characterized in that**
a clamping body (6) cooperates with the slot edges (41) via a deflection device (42, 62) which converts a reduction of the slot width into a radial clamping movement of the clamping body (6) for radial preloading against the outer casing surface of the casing tube (33).

2. The steering column as claimed in claim 1, **characterized in that** the clamping body (6) is arranged in the region of the slot (4) between the slot edges (41) and the outer casing surface of the casing tube (33).

3. The steering column as claimed in one of the preceding claims, **characterized in that** the clamping body (6) has a control face (62) which cooperates with a corresponding control face (42) formed on the guide unit (34).

4. The steering column as claimed in claim 3, **characterized in that** a control face (62) of the clamping body (6) or the guide unit (34) has at least one wedge face (62) which slopes against the circumferential direction and runs parallel to the longitudinal axis (L), and which contacts a corresponding support face (42) on the guide unit (34) or on the clamping body (6).

5. The steering column as claimed in claim 3 or 4, **characterized in that** the clamping body (6) comprises two wedge faces (62) which are arranged mirror-symmetrically with respect to a longitudinal plane and run together radially towards the outside, and which are arranged between corresponding support faces (42) on the guide unit (34).

6. The steering column as claimed in any of the preceding claims, **characterized in that** the clamping body (6) has a slide face (61) directed radially against the casing surface.

7. The steering column as claimed in any of the preceding claims, **characterized in that** the clamping body (6) has at least one lubrication pocket (63).

8. The steering column as claimed in any of the preceding claims, **characterized in that** the clamping body (6) is made at least partially of a plastic.

9. The steering column as claimed in any of the preceding claims, **characterized in that** the clamping body (6) is supported on the guide unit (34) in the direction of the longitudinal axis (L).

10. The steering column as claimed in any of the preceding claims, **characterized in that** the preload device (5) has a tightening bolt (51) which extends over the slot (4) transversely to the longitudinal axis (L) and acts in the circumferential direction in the region of the slot edges (41).

11. The steering column as claimed in claim 10, **characterized in that** the clamping body (6) is supported on the tightening bolt (51) in the direction of the longitudinal axis (L).

## Revendications

1. Colonne de direction (1) réglable électriquement pour un véhicule automobile, comprenant
un tube d'enveloppe (33) dans lequel un arbre de direction (31) est monté de manière à pouvoir tourner autour de son axe longitudinal (L) et qui est logé dans une unité de guidage (34) pouvant être reliée à une carrosserie d'un véhicule automobile de manière à pouvoir être réglé de manière télescopique dans la direction de l'axe longitudinal (L), et un entraînement de réglage (7) à moteur électrique qui est disposé entre le tube d'enveloppe (33) et l'unité de guidage (34),
l'unité de guidage (34) entourant par une surface d'appui intérieure (36) une surface d'enveloppe extérieure du tube d'enveloppe (33), et présentant une fente (4) s'étendant dans la direction de l'axe longitudinal (L), qui a une largeur de fente entre ses bords de fente (41) opposés l'un à l'autre, sur laquelle agit un dispositif de précontrainte (5), par lequel peut être appliquée une force de serrage (S) agissant pour réduire la largeur de fente, pour précontraindre la surface d'appui (36) avec la surface d'enveloppe,
le dispositif de précontrainte (5) étant fixé de manière inamovible et permanente, **caractérisé en ce que**
qu'un corps de serrage (6) coopère avec les bords de la fente (41) par l'intermédiaire d'un dispositif de renvoi (42, 62) qui transforme une réduction de la largeur de la fente en un mouvement de serrage radial du corps de serrage (6) pour la précontrainte radiale contre la surface d'enveloppe extérieure du tube d'enveloppe (33).

2. Colonne de direction selon la revendication 1, **caractérisée en ce que** le corps de serrage (6) est disposé dans la zone de la fente (4) entre les bords de la fente (41) et la surface d'enveloppe extérieure du tube d'enveloppe (33).

3. Colonne de direction selon l'une des revendications précédentes, **caractérisée en ce que** le corps de serrage (6) présente une surface de commande (62) qui coopère avec une surface de commande (42) correspondante formée sur l'unité de guidage (34).

4. Colonne de direction selon la revendication 3, **caractérisée en ce qu'**une surface de commande (62) du corps de serrage (6) ou de l'unité de guidage (34) présente au moins une surface en coin (62) parallèle à l'axe longitudinal (L) et inclinée par rapport à la direction circonférentielle, qui est en contact avec une surface d'appui (42) correspondante sur l'unité de guidage (34) ou sur le corps de blocage (6).

5. Colonne de direction selon la revendication 3 ou 4, **caractérisée en ce que** le corps de serrage (6) présente deux surfaces en coin (62) disposées de manière symétrique par rapport à un plan longitudinal, qui convergent radialement vers l'extérieur, et sont disposées entre des surfaces d'appui (42) correspondantes sur l'unité de guidage (34).

6. Colonne de direction selon l'une des revendications précédentes, **caractérisée en ce que** le corps de serrage (6) présente une surface de glissement (61) orientée radialement contre la surface d'enveloppe.

7. Colonne de direction selon l'une des revendications précédentes, **caractérisée en ce que** le corps de serrage (6) présente au moins une poche de lubrification (63).

8. Colonne de direction selon l'une des revendications précédentes, **caractérisée en ce que** le corps de serrage (6) est réalisé au moins partiellement en une matière plastique.

9. Colonne de direction selon l'une des revendications précédentes, **caractérisée en ce que** le corps de serrage (6) s'appuie sur l'unité de guidage (34) dans la direction de l'axe longitudinal (L).

10. Colonne de direction selon l'une des revendications précédentes, **caractérisée en ce que** le dispositif de précontrainte (5) présente un boulon de serrage (51) qui s'étend transversalement à l'axe longitudinal (L) sur la fente (4) et s'engage dans la zone des bords de la fente (41) dans la direction périphérique.

11. Colonne de direction selon la revendication 10, **caractérisée en ce que** le corps de serrage (6) s'appuie sur le boulon de serrage (51) dans la direction de l'axe longitudinal (L).
